# EUROPEAN PATENT SPECIFICATION

(11) **EP 1 393 529 B1**
(45) Date of publication and mention of the grant of the patent: **24.02.2010**
(21) Application number: 03703683.7
(22) Date of filing: 03.01.2003
(51) Int. Cl.: H04L 29/06

(54) **CONTENT-BASED CACHING AND ROUTING OF CONTENT USING SUBSCRIPTION INFORMATION**
INHALTSABHÄNGIGE CACHESPEICHERUNG UND LEITWEGLENKUNG VON INHALTEN UNTER BENUTZUNG VON ZUGRIFFSINFORMATIONEN
MISE EN ANTEMEMOIRE FONDEE SUR LE CONTENU ET ACHEMINEMENT DU CONTENU AU MOYEN DES INFORMATIONS DE SOUSCRIPTION

(30) Priority: 11.01.2002 US 43918
(43) Date of publication of application: 03.03.2004
(60) Divisional application: 09171418.8
(73) Proprietor: Intel Corporation, Santa Clara, CA 95052 (US)
(72) Inventor: PENDAKUR, Ramesh, Hillsboro, OR 97124 (US)
(74) Representative: Dunlop, Hugh Christopher
(86) International application number: PCT/US2003/000169
(87) International publication number: WO 2003/061245

(56) References cited:
- EP-A- 1 089 201
- WO-A-01/93524
- WO-A-97/26729
- WO-A-99/44159
- US-A1- 2001 003 828
- US-A1- 2001 012 299

## Description

### COPYRIGHT NOTICE

Contained herein is material that is subject to copyright protection. The copyright owner has no objection to the facsimile reproduction of the patent disclosure by any person, as it appears in the Patent and Trademark Office patent files or records, but otherwise reserves all rights to the copyright whatsoever.

### FIELD OF THE INVENTION

This invention relates to content delivery, in general, and more specifically to delivering personalized content along network nodes using a content-based scheme.

### BACKGROUND OF THE INVENTION

The idea of delivering content is nothing new. Many attempts have been made to personalize content delivery by providing users access to content of their choice and needs. Typically, users have access to various databases, such as news articles, sports statistics, and stock quotes. The users may access such information in plain text format and/or access the information by playing audio and/or video clips. Further, the users have the option of subscribing to databases from content providers, or downloading such databases on their own devices, such as computers and handheld devices.

The broadcast content-delivery methods and apparatus available today are address-based, and therefore, rely on end-user devices, such as set-top boxes to actively access the available information, and sort out the relevant information. Such method and apparatus are very inefficient, because, they require information to be available even when not needed, and therefore waste bandwidth. Further, the users are required to choose from a practically unlimited supply of unstructured information, and repeat the process every time the users' interests change.

Further, due to the address-based nature of today's content-delivery methods and apparatus, they merely compress and bundle the information files without much-needed categorization of information. Lack of categorization is one reason why content-delivery cannot be personalized. Further, the lack of categorization makes it extremely difficult and inefficient for users or administrators to search the content. Hence, with today's increasing demand for information, the address-based content delivery methods and apparatus are uneconomical and inefficient.

US 2001/0003828 A1 describes a client-based system which has a scheduling subsystem to schedule a time to obtain the Web content from the server. When the client reaches the scheduled time, the scheduling subsystem generates an event notification that contains sufficient information explaining how to retrieve the Web content. The client-based system has a delivery subsystem that is responsive to the event notification to obtain the Web content at the time set by the scheduling subsystem. The delivery subsystem preferably has multiple delivery modules that enable different types of distribution mechanism. In addition to the Web content or data itself, the delivery subsystem obtains an index to the Web content. The index summarizes the Web content to facilitate local search and find tasks. The index and Web content are stored in a cache at the client. An indexing subsystem presents the index to a user and enables the user to select from the index portions of the Web content that they prefer. Based on these preferences, filters are created to remove items not of interest. When the client is offline, the user browses the cached Web content. The user is offered essentially the same functionality as a live online session, except that any requests to a remote server are temporarily accumulated for later submission. When the client reconnects to the server, all accumulated data is sent in batch to the appropriate servers. The user can also create his/her own channel by aggregating content from different channels.

### STATEMENT OF INVENTION

According to one aspect of the invention, there is provided a method according to claim 1.

According to another aspect of the invention, there is provided a content delivery system according to claim 5.

### BRIEF DESCRIPTION OF THE DRAWINGS

The appended claims set forth the features of the invention with particularity. The invention, together with its advantages, may be best understood from the following detailed description taken in conjunction with the accompanying drawings of which:
Figure 1 is a block diagram of a typical computer system upon which one embodiment of the present invention may be implemented;
Figure 2 is a block diagram illustrating an exemplary hierarchical content distribution network in which the present invention may be implemented;
Figure 3 is a block diagram conceptually illustrating an overview of delivering content from a content delivery system to a content receiving system, according to one embodiment of the present invention;
Figure 4 is a flow diagram conceptually illustrating content delivery, according to one embodiment of the present invention;
Figure 5 is a block diagram conceptually illustrating content delivery in a hierarchy of network nodes using a content-based caching and forwarding scheme, according to one embodiment of the present invention;
Figure 6 is a flow diagram conceptually illustrating content delivery processing, according to one embodiment of the present invention;
Figure 7 is a block diagram conceptually illustrating a cable television network using content-based scheme for content delivery, according to one embodiment of the present invention.

### DETAILED DESCRIPTION OF EMBODIMENTS

A method and apparatus are described for delivering content throughout a hierarchy of network nodes using a content-based caching and routing scheme, which relies upon subscription information from downstream nodes. Broadly stated, embodiments of the present invention allow scheduling and distribution of personalized content by generating and distributing a content-based bit stream appropriate for the particular sub-tree of the distribution network.

A system, apparatus, and method are provided for providing personalized content delivery using a content-based scheme based on user profiles comprising content subscription information. According to one embodiment of the present invention, a user may provide content subscription information via a corresponding network node. A user profile corresponding to the user may be generated using the content subscription information. The content based on the user profile may then be delivered to the user via the corresponding network node.

According to one embodiment, a metadata dictionary of content descriptors may be periodically provided to all the network nodes in the hierarchy for uniformity and consistency in (metadata) vocabulary. The content descriptors may be associated with content to generate descriptive content. The descriptive content may then be cached and routed according to user subscriptions.

According to one embodiment, a content bit stream based on aggregated subscription information may be generated and delivered to a hierarchy of network nodes. The content bit stream may then be filtered at various levels of the hierarchy to provide content to the users based on their corresponding content subscriptions, as identified by their user profiles, for example.

In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form.

The present invention includes various steps, which will be described below. The steps of the present invention may be performed by hardware components or may be embodied in machine-executable instructions, which may be used to cause a general-purpose or special-purpose processor or logic circuits programmed with the instructions to perform the steps. Alternatively, the steps may be performed by a combination of hardware and software.

The present invention may be provided as a computer program product, which may include a machine-readable medium having stored thereon instructions, which may be used to program a computer (or other electronic devices) to perform a process according to the present invention. The machine-readable medium may include, but is not limited to, floppy diskettes, optical disks, CD-ROMs, and magneto-optical disks, ROMs, RAMs, EPROMs, EEPROMs, magnetic or optical cards, flash memory, or other type of media / machine-readable medium suitable for storing electronic instructions. Moreover, the present invention may also be downloaded as a computer program product, wherein the program may be transferred from a remote computer to a requesting computer by way of data signals embodied in a carrier wave or other propagation medium via a communication link (e.g., a modem or network connection).

Importantly, while embodiments of the present invention will be described with reference to viewers and streaming video, the apparatus and methods described herein are equally applicable to various other types of media and multimedia. For example, viewers and/or listeners may receive steaming audio and video, streaming audio, text, graphics, animation, data, and the like.

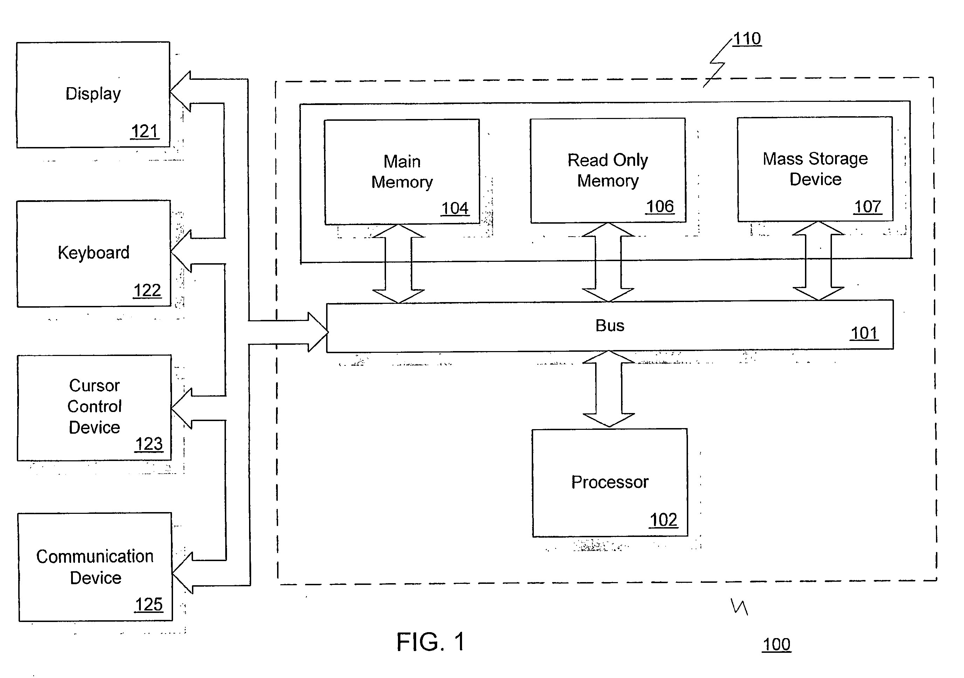

**Figure 1** is a block diagram of a typical computer system upon which one embodiment of the present invention may be implemented. Computer system 100 comprises a bus or other communication means 101 for communicating information, and a processing means such as processor 102 coupled with bus 101 for processing information. Computer system 100 further comprises a random access memory (RAM) or other dynamic storage device 104 (referred to as main memory), coupled to bus 101 for storing information and instructions to be executed by processor 102. Main memory 104 also may be used for storing temporary variables or other intermediate information during execution of instructions by processor 102. Computer system 100 also comprises a read only memory (ROM) and/or other static storage device 106 coupled to bus 101 for storing static information and instructions for processor 102.

A data storage device 107 such as a magnetic disk or optical disc and its corresponding drive may also be coupled to computer system 100 for storing information and instructions. Computer system 100 can also be coupled via bus 101 to a display device 121, such as a cathode ray tube (CRT) or Liquid Crystal Display (LCD), for displaying information to an end user. Typically, an alphanumeric input device 122, including alphanumeric and other keys, may be coupled to bus 101 for communicating information and/or command selections to processor 102. Another type of user input device is cursor control 123, such as a mouse, a trackball, or cursor direction keys for communicating direction information and command selections to processor 102 and for controlling cursor movement on display 121.

A communication device 125 is also coupled to bus 101. The communication device 125 may include a modem, a network interface card, or other well-known interface devices, such as those used for coupling to Ethernet, token ring, or other types of physical attachment for purposes of providing a communication link to support a local or wide area network, for example. In this manner, the computer system 100 may be coupled to a number of clients and/or servers via a conventional network infrastructure, such as a company's Intranet and/or the Internet, for example.

It is appreciated that a lesser or more equipped computer system than the example described above may be desirable for certain implementations. Therefore, the configuration of computer system 100 will vary from implementation to implementation depending upon numerous factors, such as price constraints, performance requirements, technological improvements, and/or other circumstances.

It should be noted that, while the steps described herein may be performed under the control of a programmed processor, such as processor 102, in alternative embodiments, the steps may be fully or partially implemented by any programmable or hard-coded logic, such as Field Programmable Gate Arrays (FPGAs), TTL logic, or Application Specific Integrated Circuits (ASICs), for example. Additionally, the method of the present invention may be performed by any combination of programmed general-purpose computer components and/or custom hardware components. Therefore, nothing disclosed herein should be construed as limiting the present invention to a particular embodiment wherein the recited steps are performed by a specific combination of hardware components.

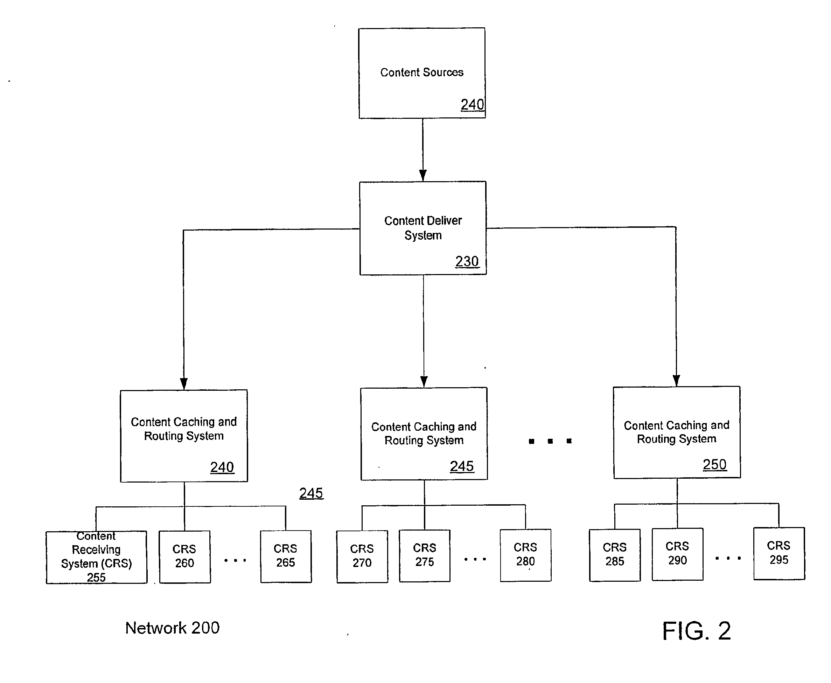

**Figure 2** is a block diagram conceptually illustrating an exemplary hierarchical content distribution network in which the present invention may be implemented. Many types of networks and protocols are available, and may be used. However, for illustrative purposes only, fiber optics may be used downstream up to content caching and routing systems 240-250, and then twisted pairs or coaxial cables may be used down to the content receiving systems 255-295.

Connected to this network 200 is are content sources 240, content delivery system 230 (delivery system), content caching and routing systems (caching and routing systems) 240-50, and content receiving systems (receiving system) 255-295. The number and arrangement of this equipment may vary depending on the application.

The content sources 240 may include the sources that provide the content to be delivered by the delivery system 230. The delivery system 230 may deliver content to other systems, subsystems, or nodes connected to the network 200. The caching and routing systems 240-50 may receive the content from the delivery system 230. The content is then cached and filtered on to the receiving systems 255-295. The receiving systems 255-295 ultimately receive the content delivered by the delivery system 230, and may also provide the content to the end-users. The delivery and receiving systems may have several modules coupled to one another. A software module may be coupled to another module to receive variables, parameters, arguments, pointers, etc. and/or to generate or pass results, updated variables, pointes etc. A software module may also be a software driver to interface with the operating system running on the platform. Further, a software module may be a hardware driver to configure, setup, initialize, send and receive data to and from a hardware device.

The network 200 may provide interconnections to the delivery system 230, the receiving systems 255-295, and other nodes and/or systems. The network 200 may correspond to any topologies and protocols. Some of the examples are the Internet, Local Area Network (LAN), Wide Area Network (WAN), broadcast network, etc. The transmission medium may be any suitable communication medium, such as air, cable, electromagnetic, optic, etc.

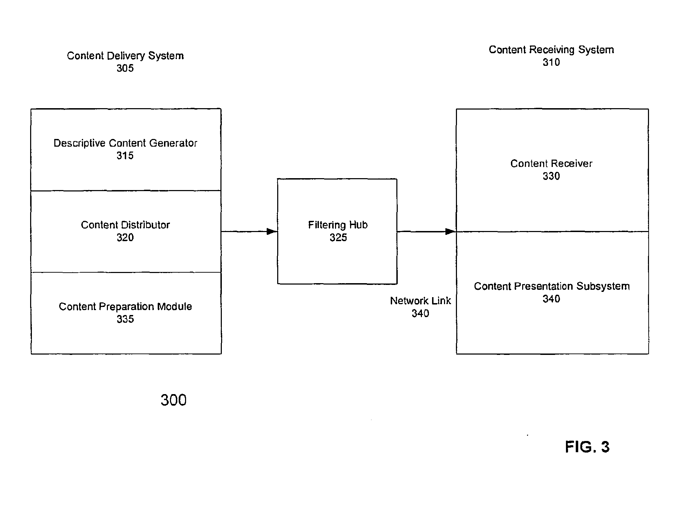

**Figure 3** is a block diagram conceptually illustrating an overview of delivering content from a content delivery system (delivery system) to a content receiving system (receiving system), according to one embodiment of the present invention. As illustrated, the network 300 comprises a delivery system 305 and a receiving system 310. The delivery system 305 may be a website, a content provider (such as a cable operator/provider, a television/radio network, a satellite service provider), an internet service provider (ISP), or any system that downloads, personalizes, packages, delivers or broadcasts content to other systems and/or nodes. The delivery system 305 may comprise one or more servers, computer systems, or platforms with appropriate hardware and software to generate and prepare the content to be delivered.

According to one embodiment, the delivery system 305 may include a descriptive content generator 315. The descriptive content generator 315 generates and/or packages the descriptive content by associating metadata vocabulary or content descriptors with the content. The content descriptors or vocabulary are obtained from a metadata dictionary, which, according to one embodiment, may be included in the delivery system 305. The delivery system 305 may comprise a content preparation module 335 for preparing a content bit stream based on aggregated subscription information from content receiving systems 310. The delivery system 305 may also include a content distributor 320 for distributing the content bit stream to appropriate filtering hubs 325 for further filtering, pruning, and forwarding. According to one embodiment, the content distributor 320 may include the content preparation module 335. The filtering hubs 325 knowing the individual users' profiles prune and filter the content stream into appropriate content streams before downstreaming the content streams to the receiving system 310.

The receiving system 310 may receive the content streams delivered by the delivery system. The receiving system 310 may be similar to the delivery system 305 and may include a server, a computer system, and a platform. The receiving system 310 may include content receivers (receivers) 330 to perform the receiving function. The receiving system 310 may also include a content presentation subsystem 340 to present the content to the users via an interface to the users, so that the users may access the corresponding content streams efficiently and intelligently. The interface may comprise a multimedia device, such as a television, a computer, a handheld device, or any other system that may receive, provide and/or display the content. The receiving system 310 may comprise an antenna (e.g., rabbit ears, satellite dish, etc.). The receiving system 310 may have different levels of intelligence, as desired, such as intelligence to know how to connect and receive the content (e.g., tune to a particular channel to receive a corresponding predetermined broadcast transmission) and to have the intelligence to receive and use a schedule of broadcast (e.g., to use a conceptual TV guide of sorts).

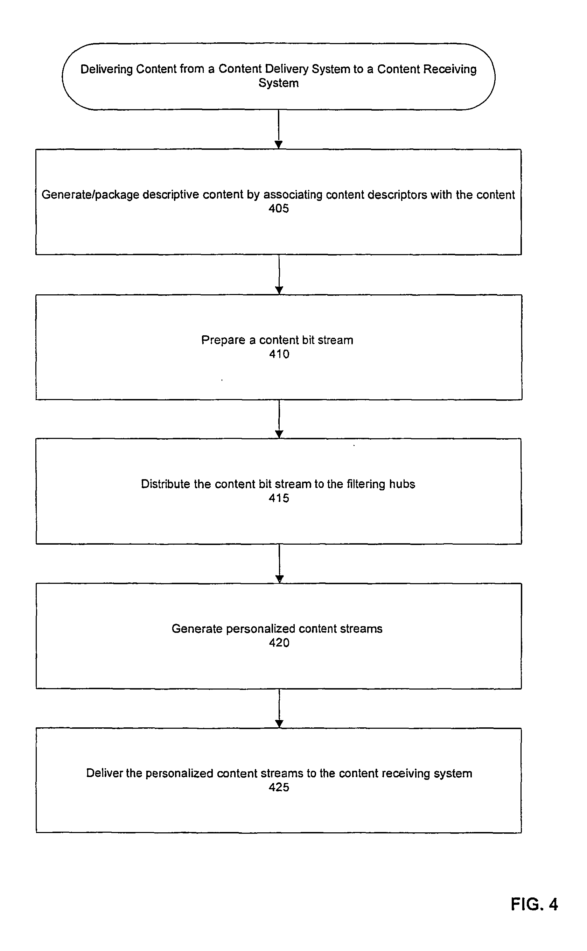

**Figure 4** is a flow diagram conceptually illustrating content delivery, according to one embodiment of the present invention. First, a descriptive content generator may associate content descriptors with the content for generating and/or packaging descriptive content in processing block 405. According to one embodiment, the descriptive content generator may receive the content from various content sources. Using the descriptive content, a content bit stream may then be prepared based on a collective subscription information by a content preparation module in processing block 410. The collective subscription information may include content preferences and content ratings as provided by users on,a collective basis. Such collective subscription information may serve as a much more accurate way of determining popularity of a program, in comparison to relying on a general survey, such as Neilson Rating.

The content bit stream may then be distributed by a content distributor to the respective filtering hubs in processing block 415. The filtering hubs may then compare the content in the content bit stream with each of the user profiles for determining the relevance of the data. Such comparison may include filtering and pruning of the content bit stream into personalized content streams corresponding to each of the user profiles in processing block 420. The personalized content streams are then delivered by the filtering hubs to various content receivers of the content receiving system in processing block 425. The content presentation subsystems may then provide the personalized content streams to each of the corresponding user.

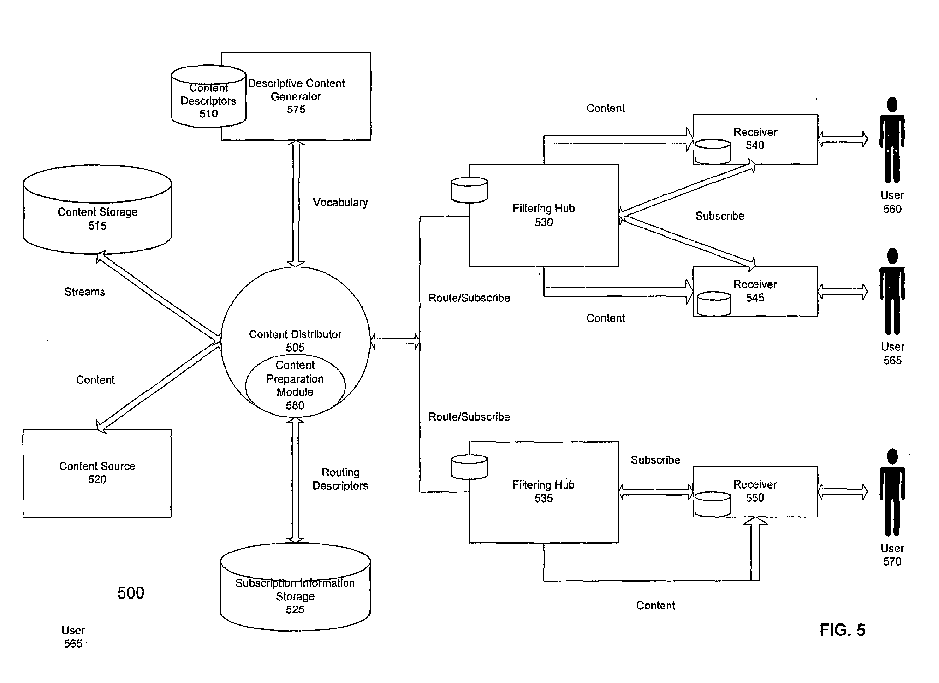

**Figure 5** is a block diagram conceptually illustrating content delivery in a hierarchy of network nodes using a content-based caching and forwarding scheme, according to one embodiment of the present invention. As illustrated, the network 500 comprises a content distributor 505 for distributing the content, filtering hubs 530-35 for caching and filtering the content, and receivers 540-50 for receiving the content.

According to one embodiment, the content distributor 505 may comprise any system or type of content provider, such as a television/radio network, e.g., ABC or NBC, which may transmit content bit stream to various local broadcasters, such as KABC or KNBC, serving as network nodes, such as the filtering hubs 530-35. The content distributor 505 may be a satellite service provider, such as Dish Network or DirecTV, for distributing the content along the network 500 via a satellite system. Further, the content distributor may include a cable provider or Multiple System Operator (MSO) for distributing the content to various network nodes in a cable network. Any combination of content distributors is contemplated. The content distributor 505 may include an Internet Service Provider (ISP), or any other system or provider that downloads the content, prepares and/or packages the content, and delivers and/or broadcasts the content.

According to one embodiment, the content distributor 505 may have access to a metadata dictionary 510 comprising metadata vocabulary (vocabulary) or content descriptors (descriptors). The metadata dictionary 510 may comprise common vocabulary so that it may be understood throughout the network 500. The vocabulary 510 may include terms, phrases, or descriptive paragraphs for describing content. Further, the metadata dictionary 510 may be periodically updated, whenever necessary, with new and/or amended vocabulary. The content distributor 505 may provide the most recent version of the metadata dictionary 510 to all the network nodes, including the filtering hubs 530-35 and receivers 540-550. This may create and sustain uniformity and common understanding of the vocabulary 510, so that the (descriptive) content, subscription information, and user profiles may be fully and correctly understood by all the nodes in the network 500.

Metadata vocabulary or content descriptors may comprise content or media descriptor tags that may characterize a logical grouping of content, also known as packages, so that the content may be used efficiently and intelligently within a given network. A package may include elements or content, such as HyperText Markup Language (HTML) pages, MP3 files, QuickTime movies, video clips, audio clips, and any other suitable content. The package may be independent of the network 500 and transmission mechanism and policies. Further, the package may be represented with a unique identifier and markup language data.

According to one embodiment, the vocabulary or descriptors 510 may be associated with the content thereby attaching description to the content, and therefore, generating and/or packaging descriptive content. A descriptive content generator 575 may attach descriptors 510 to the content, received from a content source 520, for providing attributes and characteristics, such as, but not limited to, type of the content, relevance of the content, content transmission time, the method of transmission. Typically, the descriptors 510 will be separate from the actual portion of the content that is being distributed, although other embodiments are contemplated, such as those where the descriptive content is sampled, from within the presented content. For example, the descriptive content may indicate content type (e.g., movie, sitcom, mini-series, news, music, sports), content category (e.g., baseball, comedy, action, science fiction, horror, jazz, blues), content subject matter (e.g., Los Angeles Dodgers, economics, politics, travel), and other information.

According to one embodiment, the content source 520 is linked with the content distributor 505. The content source 520 may include various content sources that provide the content to be distributed by the content distributor 505. The content sources 520 may include any type of content source that can provide content, such as websites, multimedia devices, television/radio networks, cable operators/providers, and satellite server providers. The content received from content sources 520 may, therefore, include, web content, re-purposed web content, produced content, and external content. For example, the web content may include websites and files retrieved from a website; the re-purposed content may include previously retrieved websites and files; the produced content may include content that has been created, generated, composed, or produced for delivery; and, the external content may include any other external content produced and/or stored elsewhere.

According to one embodiment, the content may be of any form desired for a particular implementation, and is to be interpreted broadly. For example, the content may be computer software, multimedia content, e.g., various types of programs, movies, videos, videos on demand, video games, audio, MP3 audio, and other types of content, such as structured data. The content may have a digital format, and digital processing may be used on the content including storage, electronic manipulation, perfect copying, compression, transmission, and others. For example, an identical copy of the digital content may be created and a bit-wise comparison of the original and the copy may be used to verify that the two are identical.

The content may be in an electronically accessible format. Typically, the content may exist as a computer file having a particular file format that is compatible, standard, or efficient for the type of content and will be stored in a memory. For example, in case of an audio content, the file format may be an MP3 format, and the content may be stored in a memory representing an audio library. However, other embodiments are contemplated. For example, according to one embodiment, the digital content may exist as a stream of digital data. The stream of digital data may be provided by a digital data generating source or device (e.g., a digital camera/recorder), may be provided by an electronically connected source or provider (e.g., a news feed or a stock ticker), or may be provided by another functionally connected entity.

According to one embodiment, the content distributor 505 may have access to or may include or may be coupled to a content storage 515 and a subscription information storage 525. The content storage 515 may contain and store (a master copy of) all the content received from the content sources 520, and at various levels within the network 500. The content distributor 505 may access the content storage 515 for accessing any piece of content at any time. The content distributor 505 may also periodically, or when necessary, receive the content from the content sources 520. Further, all the subscription information received from the users 560-70 may be contained and stored in the subscription information storage 525. As with the content, the content distributor 505 may also access all the subscription information provided by the users, and received/collected by and within the network 500. According to one embodiment, the subscription information may include users' 560-70 requests for certain content, their interest-level in relations to the requested content, date and/or time for receiving such and other content, and channel information. The subscription information may also include the users' 560-70 demographic information, geographic information, and other related, needed, and suitable information.

The filtering hubs 530-535 may aggregate the individual subscription information received from downstream network nodes and present them as subscriptions to upstream nodes until the content distributor 505 is reached. According to one embodiment, the content distributor 505 may also include or be coupled to a content preparation module 580 for preparing an aggregated content bit stream based on the collective subscription information. The content preparation module 580 may match the content and the collective subscription information to form an aggregated content bit stream for all the network nodes. By relying on the subscription information, or in other words, by using a content-based scheme, the available bandwidth may be maximized. Subscription information may serve as a more accurate form of a rating survey, such as Nielson Rating, which indicates the users' 530-570 interest-level. The available bandwidth may be allocated to various content based on the users' 530-570 interest-level in content.

According to one embodiment, the users 560-70, including viewers and/or listeners, may provide subscription information by accessing their respective receivers 540-550. For example, a user 560-70 may access his/her receiver via a remote control and/or keyboard, or via any other device and/or voice/action sensor, to provide the subscription information. According to one embodiment of the present invention, a user 560-70 may be of any form of user desired for a particular implementation, and is to be interpreted broadly. For example, a user may be an individual in a household, an individual set-top box may represent a user, a community of users based on households, head-ends, cable systems, zip codes, or other geographic locations, and users 560-70 may choose to join a community because of the content they may receive.

According to one embodiment, a receiver 540-50 may be part of a content receiving system (receiving system) to receive the content, and may serve as a network node. Depending on a particular implementation, according to one embodiment, the receiver 540-50 may not include content presentation capability or a content providing sub-system (e.g., a digital television) for presenting the (digital) content in a human consumable format (e.g., video presented on a display device). The receiving system, in such a case, may present the content to a separate content presentation system in a form that is functionally, electrically, and/or physically coupled with the receiving system that presents the content to the users 560-70. Alternatively, the receiver 540-50 may include content presentation capability to directly present the content to the users 575. For example, the receiver 540-50 may include a digital television, a personal video recorder, a stereo, an MP3 player, a CD ROM burner, or any other content presentation/providing sub-system.

Typically, the receiver 540-50 may include a conventional component, such as a set-top box or television. After proper installation, for example, the user 560-70 may use the set-top box to tune into a link and receive the content based on the user profile, which may be stored in the set-top box and/or at other network nodes, such as, individually, at the filtering hubs 530-35 and/or, collectively, at the subscription information storage 525.

According to one embodiment, a receiver 540-50 may be interfaced to receive a content containing signal, a decoder to decode the signal, a memory to store the content, and a processor to execute instructions, such as instructions to determine that the content has been received. For example, without limitation, the receiver 540-50, the decoder, the memory, the processor, and/or the instructions may be included in a computer system, a personal computer, a digital television having a memory and a processor, a set-top box, a personal video recorder, a sound system having a memory and a processor, or other systems. The receiving system may comprise an antenna (e.g., rabbit ears, satellite dish, etc.). The receiving system may have different levels of intelligence, as desired, such as intelligence to know how to connect and receive the content (e.g., tune to a particular channel to receive a corresponding predetermined broadcast transmission) and to have the intelligence to receive and use a schedule of broadcast (e.g., to use a conceptual TV guide of sorts).

According to one embodiment, the receivers 540-50 may also function as caching devices to cache the content, subscription information, user profiles comprising the subscription information, or any other information. Further, the receivers 540-50 may work as filtering devices in addition to the filtering hubs 530-35. In other words, the receivers 540-50 may perform the filtering function of the filtering hubs 530-35, even when the receivers 540-50 and the filtering hubs 530-35 are separate, both logically and physically. According to one embodiment, any of the network nodes may perform the filtering function, perhaps, at a different level within the network 500, from the filtering function performed by the filtering hubs 530-35. Furthermore, the receivers 540-50 and filtering hubs 530-35 may be physically and/or logically, partially or fully, integrated or segregated.

According to one embodiment, the filtering hubs 530-35 may function as caching, filtering, and forwarding devices. For example, in case of a cable provider functioning as a content distributor 505, a head-end may serve as a filtering hub 530-535. The filtering hubs 530-35 may filter/prune and/or divide the collective content bit stream received from the content distributor 505 into personalized content bit streams based on the user profiles comprising the individual subscription information received from the users 560-70. The filtering hubs 530-35 may then forward the personalized content bit streams to the corresponding users 560-70 via the corresponding receivers 540-50. Based on the subscription information received from the users 560-70, the filtering hubs 530-35 may generate individual user profiles corresponding to each user 560-70, and may cache such information for future use. When generating personalized content streams, the filtering hubs 530-35 may maximize the available bandwidth by appropriating bandwidth according to the user profiles.

Typically, a user profile may comprise subscription information as provided by the user 560-70. A user profile may correspond to a single user 560-70, a family profile may correspond to a family of users including the user 560-70, a device profile may correspond to a device associated with the user 560-70, a business profile may correspond to a business or business group that includes the user 560-70, a demographic profile may correspond to a demographic segment (e.g., the elderly, a particular race, a particular religion) that includes the user 560-70, or a geographic profile corresponding to a geographic location (e.g., downtown area, Portland) associated with the user 560-70. Thus, the profile may be a singular user profile or a community user profile. Further, other types of profiles are contemplated.

According to one embodiment, a user profile may include user information (e.g., characteristics and attributes of the user 560-70, billing information, address information), content preference data that indicates types of content preferred by the user 560-70 (e.g., sports), characteristics of content (e.g., major sporting event) that the user 560-70 prefers, content rating that indicates the user's 560-70 interest-level regarding certain content, timing preference information that indicates when the user prefers to receive or consume the content, observational profile information based on automated observation and profile recordation of content consumption behavior of the user 560-70 and/or direct contribution of profile data by the user 560-70, and any other information that describes when and how the user prefers to receive the content. According to one embodiment, the profile may contain information or data operable to differentiate or identify desired or preferred content from undesired or un-preferred content.

According to one embodiment, as mentioned above, the profile may include not only user preferences, but also content rating. In other words, the users 560-70 may enter information indicating their interest-level regarding the content using a content rating system, which may be predetermined. The content rating system may be implemented in a number of ways, and should be interpreted broadly. For example, a number of stars (such as one through four), numbers (such as 1 through 10), letters (such as A through J), symbols (such as bulls, bears, thumbs up and down), or words (such as excellent, poor) may be used, or any combination of such may be used, to rate the content. For example, the user 575 may rate action movies at 3 stars out of four stars, but rate action movies with Jackie Chen 31/2 stars out of 4 stars. Such information may then be used by the corresponding filtering hub 530-35 and/or the receivers 540-550 to populate the user profiles, and provide the personalized content stream.

According to one embodiment, conventional technologies may be used, together with any desirable modifications that will be apparent to those skilled in the art. For example, the network 500 may comprise a conventional processor to execute instructions, a conventional memory to store content, a conventional encoder to encode content, a conventional transmitter to transmit a content containing signal, a conventional receiver to receive the content containing signal, and a conventional decoder to decode content. Without limitation, the content may be converted to an MPEG format, transmitted via a tower antenna over an atmospheric communication medium, received by an antenna, and converted from the MPEG format to an uncompressed useable format.

According to one embodiment, the network 500 may comprise a content delivery/transmission system (delivery system) to deliver the content, and a content receiving/reception system (receiving system) to receive the content. The term "transmission" and "delivery" and related terms may be used broadly to refer to moving data, frequently digital data, from one place or system to another and the term "reception" and "receiving" and related terms may be used broadly to refer to accepting the moved data. Typically, delivery may include generating and submitting a content-containing machine-accessible signal, and receiving may include accepting and interpreting the content-containing machine-accessible signal. For example, a transmission tower may broadcast an electromagnetic radiation content-containing signal simultaneously to multiple receiving antennas (e.g., rabbit ear antennas) operable to accept the signal. Alternatively, rather than broadcasting, the signal may be multicast or narrowcast to specific recipients, similarly to the way cable television is delivered to cable subscribers.

According to one embodiment, the delivery system may deliver the content over a substantially one-way communication link, in which the predominant or only delivery is from the delivery system to the receiving system. According to one embodiment, the link may be bi-directional, although typically, the link will be a substantially non-client-server link. A client-server link would be typified by the receiving system issuing a request for the content, and the delivery system then issuing the content in response, similarly to the way that a web page may be received using the Internet. In contrast, in a non-client-server link, the delivery system may provide the content without the request. That is, the delivery system may deliver the content to the receiving system, and typically a plurality of other receiving systems simultaneously, without receiving a specific request that is processed and responded to or supplied.

According to one embodiment, the link may be a link that is shared by multiple receiving systems such as the described receiving system. The link may be based on a number of technologies, including satellite and dish, fiber optic, coaxial cable, and others. For example, the link may be a one way broadcast pipe in which the content is simultaneously broadcast to all of the receivers 560-70 connected with a network (e.g., having an antenna like rabbit ears or a satellite dish to receive the transmission) or narrowcast to a select group of receivers (e.g., having authorization to receive the transmission). For example, the link may carry a digital TV channel with a bandwidth of 19.39 megabits per second and may be partitioned among multiple channels such as four channels that each carry 4.85 megabits per second, which may carry either content or retransmitted/re-delivered content.

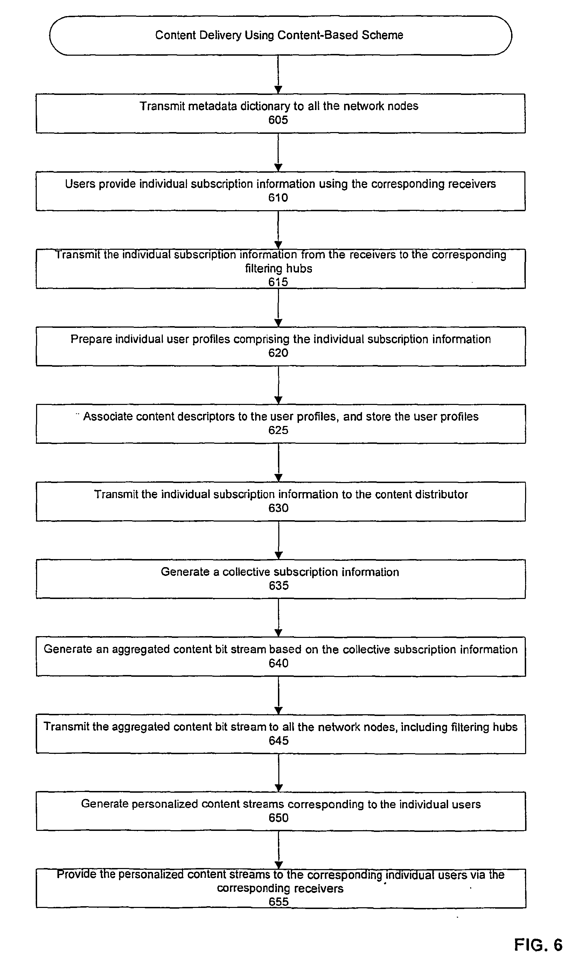

**Figure 6** is a flow diagram conceptually illustrating content delivery processing, according to one embodiment of the present invention. First, a content distributor having access to a metadata dictionary may prepare and provide an updated metadata dictionary to all the network nodes in the network in processing block 605. This may keep the network nodes updated on what metadata vocabulary to use in order to describe the subscription information received from the users. The users may provide subscription information by accessing the corresponding receivers in processing block 610. The receivers may provide the subscription information to the corresponding filtering hubs in processing block 615. The filtering hubs may aggregate the subscription information, and generate individual user profiles based on the subscription information in processing block 620. The filtering hubs may then associate content descriptors to the user profiles in processing block 625, and cache the user profiles for future comparison and filtering of the content. The filtering hubs may transmit the subscription information upstream along the network nodes to the content distributor in processing block 630.

The content distributor may aggregate the individual subscription information received from various network nodes, such as downstream filtering hubs 530-535 and/or receivers 540-550, to prepare a collective subscription, which is stored for future references in regards to content delivery in processing block 635. The content preparation module may then generate an aggregated content bit stream based on the collective subscription information in processing block 640. According to one embodiment, the content distributor may receive the content from one or more content sources. The content distributor may also simply access the master copy of the content stored in the content storage. Further, according to one embodiment, the content distributor may comprise the content preparation module for aggregating the content and preparing the aggregated content bit stream. The content distributor may then forward the aggregated content stream along to the next tier of network nodes, including to the filtering hubs, in processing block 645. After receiving the aggregated content stream, the filtering hubs may generate personalized content streams corresponding to the individual users by filtering and pruning the aggregated content stream according to the comparison of the aggregated content stream based on the collected subscription information with the individual user profiles based on the individual subscription information in processing block 650. The filtering hubs may provide the personalized content streams to the corresponding users via receivers associated with the users in processing block 655.

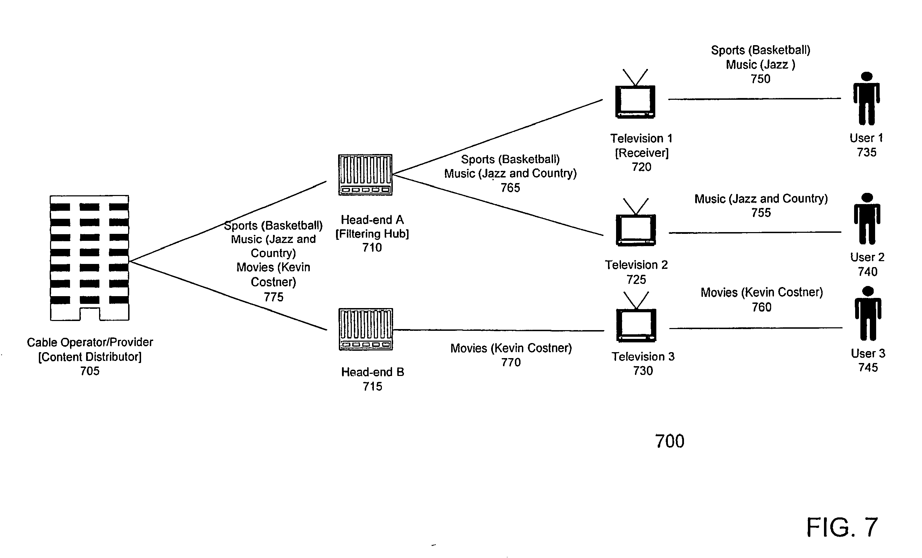

**Figure 7** is a block diagram conceptually illustrating a cable television network using content-based scheme for content delivery, according to one embodiment of the present invention. As illustrated, a cable operator/provider 705, such as AT&T or Comcast Cable, may be a content distributor 705. The cable operator/provider 705 having access to metadata dictionary may provide the metadata vocabulary or content descriptors to the entire network for consistency and uniformity in using the metadata vocabulary. Further, the content descriptors are used for enabling a content-based caching and forwarding content delivery system as opposed to an address-based content delivery system. Head-ends 710-715 are illustrated as filtering hubs 710-715, and televisions (or television set-top boxes), as illustrated, may function as receivers 720-730.

According to one embodiment, the users 735-45 may provide individual subscription information 750-760 using their televisions or television set-top boxes 720-30. The receivers 720-30 may provide the individual subscription information 750-60 received from each of the users 735-45 to the corresponding head-ends 720-30. For example, user 1 735 may request the categories of sports and music 750, specifically, basketball and jazz. User 2 740 may request only music 735 (jazz and country), while user 3 745 may request movies 760 starring Kevin Costner. The receivers 720-730 may generate individual user profiles for each of the users 735-745, and save the user profiles for future use. However, the receivers 720-730 may also forward the subscription information 750-760 to the head-ends 710-715.

Head-end A 710 receives the subscription information 765 from receiver 1 and 2 720-725, while head-end B 715 receives subscription information 770 from receiver 3 730. According to one embodiment, the head-ends 720-730 may also generate individual user profiles for future use. The head-ends 720-730 may generate aggregated subscription 775 based on the individual subscription information 765-770 received from the receivers 720-730. The aggregated subscription information 775 may be forwarded to the content distributor 705 for generating content bit stream based on the aggregated subscription information 775. The head-ends 710-715 may also save the subscription information 775 for future use in regards to future content delivery. Further, the head-ends 710-15 may associate content descriptors with the subscription information 775 based on the metadata dictionary forwarded by the content distributor 705.

According to one embodiment, the content distributor 705 may use the aggregated subscription information 775 to determine the users' 735-45 preferences, needs, and interest-levels regarding the content on a collective basis. The cable operator/provider 705 may also associate content descriptors to the aggregated subscription information 775, or may simply translate the content descriptors already assigned by the head-ends 710-715. Once the users' 735-45 preferences, needs, and interest-levels are determined, the content distributor 705 may accordingly distribute an aggregated content bit stream for maximizing the bandwidth use. For example, the content distributor 705 may allocate 50% of the bandwidth to music, and 25% of the bandwidth each to sports and movies. The content distributor 705 may further breakdown the bandwidth within a category. For example, 67% of the bandwidth assigned to music may be further assigned to jazz, and 33% may be assigned to country.

According to one embodiment, by using the content-based content delivery system, the network 700 may optimize its resources, by at least maximizing its bandwidth. Further, due to the content-based scheme, the content delivery system is dynamic in nature, and is therefore, easily generated and allows for easy tracking of content pieces before, during, and after the distribution. The individual user subscription information may be used to time-shift some of the content to specific segments of the network for further optimization of bandwidth and broadcasting schedule. For example, according to one embodiment, the time-shifting of the content may be performed by generating timeslots according to the subscription information, and therefore, by avoiding the simultaneous broadcast of all the content to all the users.

The aggregated content bit stream may then be distributed by the content distributor 705 to the network 700 based on the aggregated subscription information 775. The head-ends 710-715 may filter, prune, and divide the aggregated content bit stream into several personalized content bit streams by comparing the aggregated content bit stream to the individual user profiles generated by the receivers 720-730. The personalized bit streams may then be transmitted to the users 735-745 via the corresponding televisions 720-730.

## Claims

1. A method for content delivery comprising:
providing content to a content distributor from one or more content sources, the content distributor (320, 505) coupled to the one or more content sources;
distributing by the content distributor, a metadata dictionary to a plurality of network nodes, wherein the metadata dictionary comprises content descriptors;
receiving subscription information, based on the content descriptors and user data having one or more user preferences, user needs and user interest levels, from the plurality of network nodes;
aggregating in the content distributor subscription information to form a rating survey, wherein the rating survey is to maximize allocation of bandwidth;
allocating by the content distributor the bandwidth in accordance with the rating survey;
generating at the content distributor an aggregated content stream based on the allocated bandwidth, wherein the aggregated content stream comprises aggregated content;
distributing by the content distributor the aggregated content stream to a plurality of filtering network nodes, wherein the aggregated content stream is filtered via filtering hubs (325, 530, 535) located at the plurality of network nodes.

2. The method of claim 1, further comprising:
generating (620) a plurality of user profiles comprising the subscription information;
associating (625) the content descriptors with the plurality of user profiles; saving the user profiles;
generating (650) a plurality of personalized content streams based on the plurality of user profiles by dividing the aggregated content stream into the plurality of personalized content streams; and
providing (655) the plurality of personalized content streams to the plurality of receiving network nodes.

3. The method of claim 2, wherein the generating (650) the plurality of personalized content streams comprises filtering the aggregated content stream by comparing the aggregated content stream with the plurality of user profiles.

4. The method of claim 1, further comprising providing the plurality of personalized content streams to the plurality of corresponding users.

5. A content delivery system (230, 305) comprising:
one or more content sources to provide content to a content distributor (320, 505), the content distributor coupled to the one or more content sources;
the content distributor adapted to:
receive the content from one or more content sources;
distribute a metadata dictionary to a plurality of network nodes, wherein the metadata dictionary has content descriptors;
receive the subscription information, based on the content descriptors and user data having one or more user preferences, user needs and user interest levels, from the plurality of network nodes;
aggregate the subscription information to form a rating survey, wherein the rating survey is to maximize allocation of bandwidth;
allocate the bandwidth in accordance with the rating survey;
generate an aggregated content stream based on the allocated bandwidth, wherein the aggregated content stream comprises aggregated content, and
distribute the aggregated content stream to a plurality of filtering network nodes, wherein the aggregated content stream is filtered via filtering hubs (325, 530, 535) located at the plurality of network nodes.

6. The content delivery system (230, 305) of claim 5, wherein the content distributor (320, 505) is further to distribute a metadata dictionary to a plurality of nodes of the network, wherein the metadata dictionary comprises metadata vocabulary.

7. The content delivery system (230, 305) of claim 5, wherein the content distributor (320, 505) is further to receive content from one or more content sources.

8. The content delivery system (230, 305) of claim 5, wherein the content distributor (320, 505) comprises one or more of broadcasting networks, local broadcasters, cable providers and operators, satellite service providers, and other content providers.

9. The content delivery system (230, 305) of claim 5, wherein the filtering hubs (325, 530, 535) comprise one or more head-ends, local broadcasters, local satellite stations, and filtering stations.

10. The content delivery system (230, 305) of claim 5, further comprising multimedia devices, wherein the multimedia devices comprise content providing sub-system and content receiving sub-system.

11. The content delivery system (230, 305) of claim 10, wherein the content providing sub-system comprises content display system.

12. A data medium having stored thereon computer product code adapted to perform all the steps of any one of claims 1 to 4 when said program code is run on a computer.

## Patentansprüche

1. Verfahren zum Ausgeben von Inhalten, das Folgendes umfasst:
Übermitteln von Inhalten an einen Inhalte-Verteiler von einer oder mehreren Inhalte-Quellen aus, wobei der Inhalte-Verteiler (320, 505) mit der einen oder den mehreren Inhalte-Quellen verbunden ist;
Verteilen - durch den Inhalte-Verteiler - eines Metadatenwörterbuches an mehrere Netzwerkknoten, wobei das Metadatenwörterbuch Inhaltsdeskriptoren umfasst;
Empfangen von Zugriffsinformationen auf der Basis der Inhaltsdeskriptoren und von Nutzerdaten, die eine oder mehrere Nutzerpräferenzen, Nutzerbedürfnisse und Nutzerinteressenebenen aufweisen, von den mehreren Netzwerkknoten;
Zusammenfassen - in dem Inhalte-Verteiler - von Zugriffsinformationen, um eine Rating-Übersicht zu erstellen, wobei die Rating-Übersicht den Zweck hat, die Bandbreitenzuteilung zu maximieren;
Zuteilen - durch den Inhalte-Verteiler - der Bandbreite entsprechend der Rating-Übersicht;
Erzeugen - bei dem Inhalte-Verteiler - eines zusammengefassten Inhaltestromes auf der Grundlage der zugeteilten Bandbreite, wobei der zusammengefasste Inhaltestrom zusammengefasste Inhalte umfasst;
Verteilen - durch den Inhalte-Verteiler - des zusammengefassten Inhaltestromes an mehrere Filterungs-Netzwerkknoten, wobei der zusammengefasste Inhaltestrom durch Filterungshubs (325, 530, 535) gefiltert wird, die an den mehreren Netzwerkknoten angeordnet sind.

2. Verfahren nach Anspruch 1, das des Weiteren Folgendes umfasst:
Erzeugen (620) mehrerer Nutzerprofile, welche die Zugriffsinformationen umfassen;
Zuordnen (625) der Inhaltsdeskriptoren zu den mehreren Nutzerprofilen;
Speichern der Nutzerprofile;
Erzeugen (650) mehrerer personalisierter Inhalteströme auf der Grundlage der mehreren Nutzerprofile durch Teilen des zusammengefassten Inhaltestromes in die mehreren personalisierten Inhalteströme; und
Senden (655) der mehreren personalisierten Inhalteströme zu den mehreren empfangenden Netzwerkknoten.

3. Verfahren nach Anspruch 2, wobei das Erzeugen (650) der mehreren personalisierten Inhalteströme das Filtern des zusammengefassten Inhaltestromes durch Vergleichen des zusammengefassten Inhaltestromes mit den mehreren Nutzerprofilen umfasst.

4. Verfahren nach Anspruch 1, das des Weiteren umfasst, die mehreren personalisierten Inhalteströme an die mehreren entsprechenden Nutzer zu übermitteln.

5. System (230, 305) zum Ausgeben von Inhalten, das Folgendes umfasst:
eine oder mehrere Inhalte-Quellen zum Übermitteln von Inhalten an einen Inhalte-Verteiler (320, 505), wobei der Inhalte-Verteiler mit der einen oder den mehreren Inhalte-Quellen verbunden ist;
wobei der Inhalte-Verteiler dafür geeignet ist:
die Inhalte von einer oder mehreren Inhalte-Quellen zu empfangen;
ein Metadatenwörterbuch an mehrere Netzwerkknoten zu verteilen, wobei das Metadatenwörterbuch Inhaltsdeskriptoren aufweist;
die Zugriffsinformationen auf der Grundlage der Inhaltsdeskriptoren und von Nutzerdaten, die eine oder mehrere Nutzerpräferenzen, Nutzerbedürfnisse und Nutzerinteressenebenen aufweisen, von den mehreren Netzwerkknoten zu empfangen;
die Zugriffsinformationen zu einer Rating-Übersicht zusammenzufassen, wobei die Rating-Übersicht den Zweck hat, die Zuteilung von Bandbreite zu maximieren;
die Bandbreite entsprechend der Rating-Übersicht zuzuteilen;
einen zusammengefassten Inhaltestrom auf der Grundlage der zugeteilten Bandbreite zu erzeugen, wobei der zusammengefasste Inhaltestrom zusammengefasste Inhalte umfasst, und
den zusammengefassten Inhaltestrom an mehrere Filterungs-Netzwerkknoten zu verteilen, wobei der zusammengefasste Inhaltestrom über Filterungshubs (325, 530, 535) gefiltert wird, die sich an den mehreren Netzwerkknoten befinden.

6. System (230, 305) zum Ausgeben von Inhalten nach Anspruch 5, wobei der Inhalte-Verteiler (320, 505) des Weiteren dazu dient, ein Metadatenwörterbuch an mehrere Knoten des Netzwerkes zu verteilen, wobei das Metadatenwörterbuch Metadatenvokabular umfasst.

7. System (230, 305) zum Ausgeben von Inhalten nach Anspruch 5, wobei der Inhalte-Verteiler (320, 505) des Weiteren dazu dient, Inhalte von einer oder mehreren Inhalte-Quellen zu empfangen.

8. System (230, 305) zum Ausgeben von Inhalten nach Anspruch 5, wobei der Inhalte-Verteiler (320, 505) eines oder mehrere Rundfunksendenetze, lokale Rundfunksender, Kabelanbieter und -betreiber, Satellitendiensteanbieter und sonstige Inhalte-Anbieter umfasst.

9. System (230, 305) zum Ausgeben von Inhalten nach Anspruch 5, wobei die Filterungshubs (325, 530, 535) eine oder mehrere Kopfstellen, lokale Rundfunksender, lokale Satellitenstationen und Filterungsstationen umfassen.

10. System (230, 305) zum Ausgeben von Inhalten nach Anspruch 5, das des Weiteren Multimediavorrichtungen umfasst, wobei die Multimediavorrichtungen ein Inhalteübermittlungs-Teilsystem und ein Inhalteempfangs-Teilsystem umfassen.

11. System (230, 305) zum Ausgeben von Inhalten nach Anspruch 10, wobei das Inhalteübermittlungs-Teilsystem ein Inhalte-Anzeigesystem umfasst.

12. Datenmedium, auf dem Computerproduktcode gespeichert ist, der dafür geeignet ist, alle Schritte nach einem der Ansprüche 1 bis 4 auszuführen, wenn der Programmcode auf einem Computer abläuft.

## Revendications

1. Procédé pour fournir le contenu comprenant :
la fourniture de contenu à un distributeur de contenu à partir d'une ou de plusieurs sources de contenu, le distributeur de contenu (320, 505) couplé à une ou plusieurs sources de contenu ;
la distribution par le distributeur de contenu, d'un dictionnaire de métadonnées à une pluralité de noeuds de réseau, dans lequel le dictionnaire de métadonnées comprend des descripteurs de contenu ;
la réception d'informations de souscription, sur la base des descripteurs de contenu et des données d'utilisateur ayant une ou plusieurs préférences d'utilisateur, des besoins d'utilisateur et des niveaux d'intérêt d'utilisateur, à partir de la pluralité de noeuds de réseau ;
l'agrégation dans les informations de souscription de distributeur de contenu pour former un avis d'enquête, dans lequel l'avis d'enquête sert à maximiser l'allocation de bande passante ;
l'allocation par le distributeur de contenu de la bande passante selon l'avis d'enquête ;
la génération au distributeur de contenu d'un flux de contenu agrégé sur la base de la bande passante allouée, dans lequel le flux de contenu agrégé comprend un contenu agrégé ;
la distribution par le distributeur de contenu du flux de contenu agrégé à une pluralité de noeuds de réseau de filtrage, dans lequel le flux de contenu agrégé est filtré via des centres de filtrage (325, 530, 535) situés au niveau de la pluralité de noeuds de réseau.

2. Procédé selon la revendication 1, comprenant en outre :
la génération (620) d'une pluralité de profils d'utilisateur comprenant les informations de souscription ;
l'association (625) des descripteurs de contenu avec la pluralité de profils d'utilisateur ; la sauvegarde des profils d'utilisateur ;
la génération (650) d'une pluralité de flux de contenu personnalisés sur la base de la pluralité de profils d'utilisateur en divisant le flux de contenu agrégé dans la pluralité de flux de contenu personnalisés ; et
la fourniture (655) de la pluralité de flux de contenu personnalisés à la pluralité de noeuds de réseau de réception.

3. Procédé selon la revendication 2, dans lequel la génération (650) de la pluralité de flux de contenu personnalisés comprend le filtrage du flux de contenu agrégé en comparant le flux de contenu agrégé à la pluralité de profils d'utilisateur.

4. Procédé selon la revendication 1, comprenant en outre la fourniture de la pluralité de flux de contenu personnalisés à la pluralité d'utilisateurs correspondants.

5. Système de fourniture de contenu (230, 305) comprenant :
une ou plusieurs sources de contenu pour fournir un contenu à un distributeur de contenu (320, 505), le distributeur de contenu couplé à une ou plusieurs sources de contenu ;
le distributeur de contenu adapté pour :
recevoir le contenu à partir d'une ou plusieurs sources de contenu ;
distribuer un dictionnaire de métadonnées à une pluralité de noeuds de réseau, dans lequel le dictionnaire de métadonnées a des descripteurs de contenu ;
recevoir les informations de souscription, sur la base des descripteurs de contenu et des données d'utilisateur ayant une ou plusieurs préférences d'utilisateur, besoins d'utilisateur et niveaux d'intérêt d'utilisateur, à partir de la pluralité de noeuds de réseau ;
agréger les informations de souscription pour former un avis d'enquête, dans lequel l'avis d'enquête sert à maximiser l'allocation de bande passante ;
allouer la bande passante selon l'avis d'enquête ;
générer un flux de contenu agrégé sur la base de la bande passante allouée, dans lequel le flux de contenu agrégé comprend un contenu agrégé, et
distribuer le flux de contenu agrégé à une pluralité de noeuds de réseau de filtrage, dans lequel le flux de contenu agrégé est filtré via des centres de filtrage (325, 530, 535) situés au niveau de la pluralité des noeuds de réseau.

6. Système de fourniture de contenu (230, 305) selon la revendication 5, dans lequel le distributeur de contenu (320, 505) sert à distribuer en outre un dictionnaire de métadonnées à une pluralité de noeuds du réseau, dans lequel le dictionnaire de métadonnées comprend un vocabulaire de métadonnées.

7. Système de fourniture de contenu (230, 305) selon la revendication 5, dans lequel le distributeur de contenu (320, 505) sert en outre à recevoir le contenu d'une ou de plusieurs sources de contenu.

8. Système de fourniture de contenu (230, 305) selon la revendication 5, dans lequel le distributeur de contenu (320, 505) comprend un ou plusieurs réseaux de diffusion, diffuseurs locaux, fournisseurs et opérateurs de câble, fournisseurs de service par satellite et d'autres fournisseurs de contenu.

9. Système de fourniture de contenu (230, 305) selon la revendication 5, dans lequel les centres de filtrage (325, 530, 535) comprennent une ou plusieurs têtes de réseau, diffuseurs locaux, stations satellites locales, et stations de filtrage.

10. Système de fourniture de contenu (230, 305) selon la revendication 5, comprenant en outre des dispositifs multimédia, dans lequel les dispositifs multimédia comprennent un sous-système de fourniture de contenu et un sous-système de réception de contenu.

11. Système de fourniture de contenu (230, 305) selon la revendication 10, dans lequel le sous-système de fourniture de contenu comprend un système d'affichage de contenu.

12. Support de données ayant stocké sur celui-ci un code de produit informatique adapté pour réaliser toutes les étapes de l'une quelconque des revendications 1 à 4 lorsque ledit code de programme est exécuté sur un ordinateur.
